# EUROPEAN PATENT APPLICATION

(11) **EP 3 514 483 A1**
(43) Date of publication of application: **24.07.2019**
(21) Application number: 18782631.8
(22) Date of filing: 15.05.2018
(51) Int. Cl.: G01B 11/00, B24B 49/12

(54) **STRIP END DETECTION DEVICE AND BRUSHING DEVICE**

(30) Priority: 14.11.2017 JP 2017219518
(71) Applicant: Hotani Co., Ltd., Kaiso-gun, Wakayama 640-1131 (JP)
(72) Inventor: HOTANI, Akihiko, Wakayama 640-1131 (JP)
(74) Representative: Müller-Boré & Partner Patentanwälte PartG mbB
(86) International application number: PCT/JP2018/018701
(87) International publication number: WO 2019/097747

(57) **Abstract**

Provided is a strip edge detection device that can precisely detect an edge of a strip, and that can reduce maintenance labor; and also provided is a brushing apparatus comprising the same.

An edge detection device 7 reciprocates in a width direction of a strip 2, together with brush rolls 3, to detect an edge of the strip 2 in the width direction. The edge detection device 7 comprises a light-emitting portion 8 for emitting light from one side of the front and back surfaces of the strip 2 to the other side; a light-receiving portion 9 for receiving light emitted from the light-emitting portion 8, the light-receiving portion 9 being placed on the opposite side of the light-emitting portion 8 with respect to the strip 2; multiple covers 100 individually covering the light-emitting portion 8 and the light-receiving portion 9; an air injection means 11 for continuously injecting air to the light-emitting portion 8 or the light-receiving portion 9, the air injection means 11 being provided in each cover 100; and a water injection means 12 for injecting water to the light-emitting portion 8 or the light-receiving portion 9 at a predetermined timing, the water injection means 12 being provided in each cover 100.

## Description

### Technical Field

The present invention relates to an edge detection device that detects an edge of a belt-like metal plate (hereinafter referred to as a "strip") in the width direction thereof, and a strip brushing apparatus comprising the edge detection device.

### Background Art

In steel mills etc., the brushing of strips is conducted using brushing apparatuses in the production line of strips, such as belt-like steel plates. A brushing apparatus comprises a pair of brush rolls placed so as to vertically sandwich a strip, and performs, for example, grinding of the strip surface with brush bristles implanted on the outer peripheral surface of each brush roll. A brush roll generally has a width larger than the length of a strip in the width direction (width); thus, portions of the brush roll extending beyond the edges of the strip in the width direction (hereinafter simply referred to as "the edges of the strip") are not worn because there is no friction with the strip, thereby generating an uneven wear state in which only an inner portion of the brush roll in the width direction is worn by friction with the strip. When brush rolls in which such uneven wear occurs are used to brush a strip whose width is larger than that of the brush rolls, a brushed area and a non-brushed area are generated in the strip. Accordingly, these brush rolls can be used only to brush strips whose width is smaller than that of the brush rolls, and strips that can be brushed with these brush rolls are gradually limited to strips with a smaller width.

Accordingly, in order to prevent the uneven wear of brush rolls, the present applicant proposes a brushing apparatus comprising edge detection devices for detecting the edges of a strip, wherein brush rolls reciprocate in the width direction of a strip, while detecting the edges of the strip, to prevent the uneven wear of the brush rolls (see, for example, PTL 1).

The edge detection devices provided in the brushing apparatus of PTL 1 have a structure comprising an emitting portion and a receiving portion, and are set in positions corresponding to both ends of each brush roll. The emitting portion is placed below the strip, and emits water upwardly. The receiving portion is placed above the strip, and receives water emitted from the emitting portion. When an edge of a strip is positioned between the emitting portion and the receiving portion, water from the emitting portion is blocked by the edge of the strip. In contrast, when an edge of a strip is not positioned between the emitting portion and the receiving portion, water from the emitting portion is not blocked by the strip and enters the receiving portion. The receiving portion comprises a detection piece that moves upon reception of the entering water, and a proximity switch that outputs a detection signal upon detection of the movement of the detection piece. Whether the end of the brush roll has moved to the edge of the strip can be determined by detecting whether the water from the emitting portion is blocked by the edge of the strip and does not enter the receiving portion.

### Citation List

### Patent Literature

PTL 1: JP2003-136391A

### Summary of Invention

### Technical Problem

Since the edge detection devices of PTL 1 are set at the ends of the brush roll, contaminants, such as metal powder, oil stains, and waste threads, generated by the brushing of the strip are easily dispersed. Therefore, the accumulation of metal powder, oil stains, contaminants, etc., in the receiving portion causes poor operation of the detection piece, so that poor detection that cannot precisely detect the edges of the strip may occur. Moreover, an attempt has been made to detect the edges of a strip by a photoelectric sensor, camera, or the like; however, in any of these cases, poor detection occurs after a certain period of use because metal powder, oil stains, contaminants, etc., adhere to the sensor etc. Therefore, in order to stably brush strips, it is necessary to frequently perform maintenance, such as a cleaning operation of the edge detection device by human hand and component replacement, which requires considerable labor.

The present invention was made focusing on the above problems. An object of the present invention is to provide a strip edge detection device that can precisely detect an edge of a strip, and that can reduce maintenance labor; and to also provide a brushing apparatus comprising the same.

### Solution to Problem

The above object of the present invention can be achieved by an edge detection device that reciprocates in a width direction of a strip, together with brush rolls for brushing the strip, to detect an edge of the strip in the width direction, the edge detection device comprising:
a light-emitting portion for emitting light from one side of the front and back surfaces of the strip to the other side;
a light-receiving portion for receiving light emitted from the light-emitting portion, the light-receiving portion being placed on the opposite side of the light-emitting portion with respect to the strip;
multiple covers individually covering the light-emitting portion and the light-receiving portion, and each having an opening in a surface on a side facing the light-emitting portion or the light-receiving portion;
an air injection means for continuously injecting air to the light-emitting portion or the light-receiving portion, the air injection means being provided in each cover; and
a water injection means for injecting water to the light-emitting portion or the light-receiving portion at a predetermined timing, the water injection means being provided in each cover.

Alternatively, the edge detection device may comprise:
a light-emitting portion for emitting light from one side of the front and back surfaces of the strip to the other side;
a light-receiving portion for receiving light emitted from the light-emitting portion and reflected on the strip, the light-receiving portion being placed on the same side of the light-emitting portion with respect to the strip;
multiple covers integrally covering the light-emitting portion and the light-receiving portion, and each having an opening in a surface on a side facing the light-emitting portion and the light-receiving portion;
an air injection means for continuously injecting air to the light-emitting portion and the light-receiving portion, the air injection means being provided in each cover; and
a water injection means for injecting water to the light-emitting portion and the light-receiving portion at a predetermined timing, the water injection means being provided in each cover.

In a preferable embodiment of the edge detection device of the above structure, the air injection means is provided in a circumferential direction of the cover in a position displaced at 90° with respect to the water injection means.

In a more preferable embodiment, in the air injection means, the amount of air injected per unit time is set so that air is stably injected from the opening.

In a more preferable embodiment, the light-emitting portion and the light-receiving portion each comprise a photoelectric sensor.

In a more preferable embodiment, the edge detection device further comprises a control means for controlling the water injection means.

In a more preferable embodiment, the control means allows the water injection means to inject water when the amount of light received by the light-receiving portion is lower than a predetermined amount.

The above object of the present invention can also be achieved by a brushing apparatus comprising:
brush rolls for brushing a strip;
a brush roll stand for rotatably supporting the brush rolls;
a transport means for reciprocating the brush roll stand in a width direction of the strip; and
the edge detection device of the above structure.

### Advantageous Effects of Invention

According to the present invention, air is always continuously injected by the air injection means to the light-emitting portion and the light-receiving portion in the edge detection device; thus, metal powder, oil stains, contaminants, etc., generated by the brushing of a strip hardly adhere to the light-emitting portion and the light-receiving portion. Therefore, the light-emitting portion and the light-receiving portion can be prevented from being contaminated with metal powder, oil stains, contaminants, etc., for a short period of time. Consequently, poor detection of an edge of the strip does not occur, and the edge of the strip can be precisely detected.

Moreover, when the light-emitting portion and the light-receiving portion are severely contaminated with metal powder, oil stains, contaminants, etc., firmly adhering thereto, the dirt firmly adhering to the light-emitting portion and the light-receiving portion can be scraped off by injecting water by the water injection means, while injecting air by the air injection means, to the light-emitting portion and the light-receiving portion. Because dirt can be removed from the light-emitting portion and the light-receiving portion in the above manner, it is not necessary to frequently perform maintenance, such as a cleaning operation of the edge detection device by human hand and component replacement, which can reduce the labor required for maintenance.

### Brief Description of Drawings

Fig. 1 is a front view showing the schematic structure of a brushing apparatus according to one embodiment of the present invention.
Fig. 2 is a partial enlarged view enlarging and showing the vicinity of an edge detection device of the brushing apparatus of Fig. 1.
Fig. 3 is a plan view of a cover.
Fig. 4 is a schematic view showing the internal structure of a state in which a light-emitting portion (light-receiving portion) is covered with a cover.
Fig. 5 is a schematic view showing a state in which air is injected into the cover by an air injection means in Fig. 4.
Fig. 6 is a schematic view showing a state in which air and water are injected into the cover by the air injection means and a water injection means in Fig. 4.
Fig. 7 is an explanatory diagram for explaining the reciprocating movement of a brush roll.
Fig. 8 is a photograph showing the off-state of the light-emitting portion before dirt adheres.
Fig. 9 is a photograph showing the on-state of the light-emitting portion before dirt adheres.
Fig. 10 is a photograph showing the on-state of the light-emitting portion after dirt adheres.
Fig. 11 is a photograph showing the on-state of the light-emitting portion when dirt is washed with air.
Fig. 12 is a photograph showing the on-state of the light-emitting portion when dirt is washed with air and water.
Fig. 13 is a photograph showing the off-state of the light-emitting portion when dirt is washed with air and water.
Fig. 14 is a photograph showing the on-state of the light-emitting portion when dirt is washed with water.

### Description of Embodiments

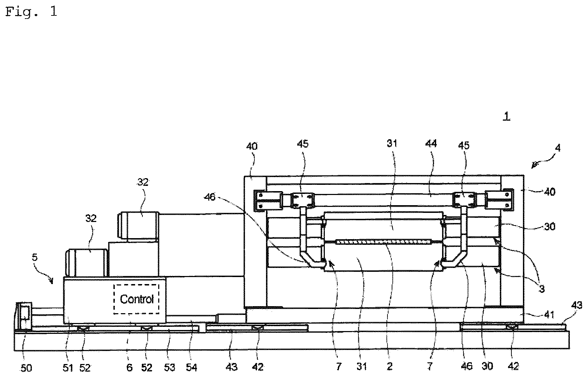

Embodiments of the present invention are described below with reference to the attached drawings. First, Fig. 1 shows a schematic structure of a brushing apparatus 1 according to one embodiment of the present invention. The brushing apparatus 1 comprises:
brush rolls 3 for brushing a metal plate (strip) 2, such as a belt-like steel plate, to be carried:
a brush roll stand 4 for rotatably supporting the brush rolls 3;
a transport means 5 for reciprocating the brush roll stand 4 in the width direction of the strip 2 (direction orthogonal to the longitudinal direction of the strip 2 along the carrying direction);
a control means 6 for controlling the reciprocating movement of the brush roll stand 4 by the transport means 5; and
edge detection devices 7 that reciprocate in the width direction of the strip 2, together with the brush rolls 3, to detect the edges of the strip 2 in the width direction (hereinafter simply referred to as "the edges of the strip 2").

The brush rolls 3 are disposed above and below the strip 2 so as to sandwich the strip 2. Each brush roll 3 is such that multiple brush bristles 31 are fixed to the outer peripheral surface of a metal roll shaft 30, and more preferably such that multiple brush disks in which the multiple brush bristles 31 are fixed to the peripheral surface of a circular disk are laminated in the axial direction. The roll shafts 30 are connected to respective motors 32, and the brush rolls 3 are rotated by the motors 32.

The brush roll stand 4 has a pair of left and right columns 40 that rotatably support the pair of upper and lower brush rolls 3. Both columns 40 are provided on a base 41. The base 41 is provided with multiple (e.g., 4) linear bearings 42. The brush roll stand 4 is guided to a pair of guide rails 43 through the linear bearings 42 so that the brush roll stand 4 is movable in the width direction of the strip 2.

In the brush roll stand 4, a supporting material 44 extending in parallel with the brush rolls 3 is laid between both columns 40. In the supporting material 44, a pair of left and right support arms 46 are attached through an attachment positioning member 45, and each edge detection device 7 is mounted in each support arm 46. The attachment positioning member 45 can control the attachment positions of the support arms 46 with respect to the supporting material 44. The edge detection devices 7 can be placed in positions corresponding to the ends of the brush rolls 3 by adjusting the attachment positions of the support arms 46.

The transport means 5 has a variable speed motor 50 (e.g., a servomotor or an inverter motor) and a drive mechanism part 51. The drive mechanism part 51 can have a structure comprising, for example, a ball screw mechanism or a feed screw mechanism, and converts the reciprocal rotation of the motor 50 to linear reciprocating motion. The drive mechanism part 51 is provided with multiple (e.g., 4) linear bearings 52. The drive mechanism part 51 is guided to a pair of guide rails 53 through the linear bearings 52 so that the drive mechanism part 51 can reciprocate in the width direction of the strip 2. The drive mechanism part 51 is connected to the brush roll stand 4 through a rod 54. As the drive mechanism part 51 moves, the brush roll stand 4 moves in the width direction of the strip 2.

The control means 6 is connected to the edge detection devices 7, and controls the operation of the motor 50 of the transport means 5 to perform processing to move the brush roll stand 4 (brush rolls 3) in the width direction of the strip 2. In addition, when an edge of the strip 2 is detected by the edge detection device 7, the control means 6 performs processing to reverse the moving direction of the brush roll stand 4 (brush rolls 3), although it is described later in detail. Further, the control means 6 controls the operation of the light-emitting portion 8 of the edge detection device 7 to perform processing to allow the light-emitting portion 8 to emit light, and processing to incorporate an electrical signal depending on the amount of light received by the light-receiving portion 9 of the edge detection device 7. Moreover, the control means 6 controls the operation of the air injection means 11 of the edge detection device 7 to perform processing to continuously inject air to the light-emitting portion 8 and the light-receiving portion 9 during the brushing of the strip 2. Furthermore, the control means 6 controls the operation of the water injection means 12 of the edge detection device 7 to perform processing to inject water to the light-emitting portion 8 and the light-receiving portion 9 at a predetermined timing.

The control means 6 is composed of, for example, a computer containing CPU, which is the main part of the control, and a memory etc. for storing programs and data. The control means 6 controls the operation of the transport means 5 and the edge detection devices 7 by control signals to execute each processing. The control means 6 can be realized by a programmed computer or by special hardware circuits.

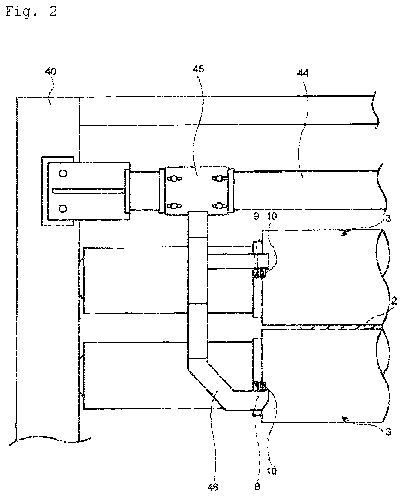

As shown in Fig. 2, each edge detection device 7 comprises a light-emitting portion 8 for emitting light from one side of the front and back surfaces of the strip 2 (the lower back surface in Fig. 2) to the other side (the upper front surface); a light-receiving portion 9 for receiving light emitted from the light-emitting portion 8, the light-receiving portion 9 being placed on the opposite side of the light-emitting portion 8 with respect to the strip 2; and multiple covers 10 individually covering the light-emitting portion 8 and the light-receiving portion 9. The light-emitting portion 8 and the light-receiving portion 9 are placed so as to face each other.

Although it is not shown, the light-emitting portion 8 has a light-projecting element, and a light-projecting lens etc. for collecting light from the light-projecting element and projecting the light toward the light-receiving portion 9. For example, a light-emitting diode (LED) is used as the light-projecting element. Although it is not shown, the light-receiving portion 9 has a light-receiving element, and a light-receiving lens etc. for incorporating the light from the light-projecting element so that the light-receiving element receives the light. For example, a photodiode (PD) is used as the light-receiving element. Known photoelectric sensors can be used as the light-emitting portion 8 and the light-receiving portion 9. The light-emitting portion 8 and the light-receiving portion 9 are connected to the control means 6 through cables, which are not shown.

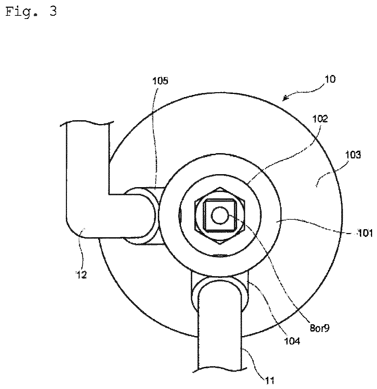

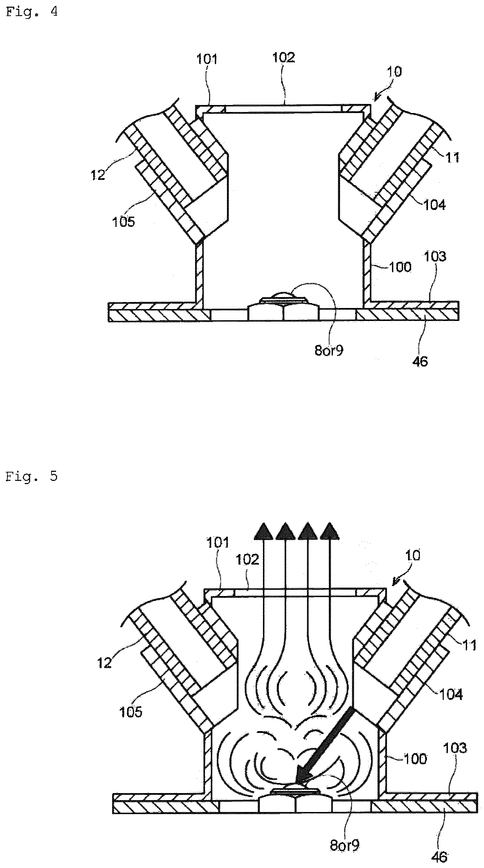

The cover 10 is formed in a cylindrical shape made of metal, such as stainless steel or a steel plate subjected to corrosion-resistant plating, or made of a synthetic resin, such as polypropylene (PP) or polyamide (PA), as shown in Figs. 3 and 4. The cover 10 has a ceiling wall 101 at the end on the side facing the light-emitting portion 8 or the light-receiving portion 9, and an opening 102 is formed in the ceiling wall 101. The opening 102 is formed in a circular shape in plan view, and is an outlet port through which light from the light-emitting portion 8 is emitted, or an inlet port through which light from the light-emitting portion 8 enters. The size of the opening 102 in plan view is preferably set to the minimum size including the range of light emitted from the light-emitting portion 8 (i.e., the size of light in the direction orthogonal to the direction in which the light is emitted from the light-emitting portion 8). Because the size of the opening 102 is not overly large, the cover 10 can effectively exhibit an air purge effect, described later. Moreover, the cover 10 has a flange 103 at the end on the side opposite to the ceiling wall 101. The flange 103 is fixed to the support arm 46 using a fastening means (not shown), such as a bolt.

The cylindrical wall 100 of the cover 10 is provided with an air supply portion 104 and a water supply portion 105. The air supply portion 104 and the water supply portion 105 are each composed of a cylindrical body, and are fixed to the cylindrical wall 100 in an obliquely downward inclined state so that the axial direction faces the light-emitting portion 8 or the light-receiving portion 9. The lower ends of the air supply portion 104 and water supply portion 105 are partially cut so as not to block light emitted from the light-emitting portion 8 or light entering the light-receiving portion 9.

An air injection means 11 is attached to the air supply portion 104. Although it is not shown, the air injection means 11 has a structure comprising, for example, a supply source of air E, a pump for pressure-supplying air E, a pipe for carrying air E, and a nozzle for injecting air E. The air injection means 11 is not limited to the above structure. The air injection means 11 continuously injects air to the light-emitting portion 8 or the light-receiving portion 9 during brushing of the strip 2, as shown in Fig. 5. The air injected to the light-emitting portion 8 or the light-receiving portion 9 then becomes an upward flow (in the case of the cover 10 covering the light-emitting portion 8) or a downward flow (in the case of the cover 10 covering the light-receiving portion 9), flows toward the opening 102 of the cover 10, and is ejected from the opening 102. In the air injection means 11, the amount of air injected per unit time is set so that air from the opening 102 of the casing 10 is stably injected at a predetermined wind speed or more.

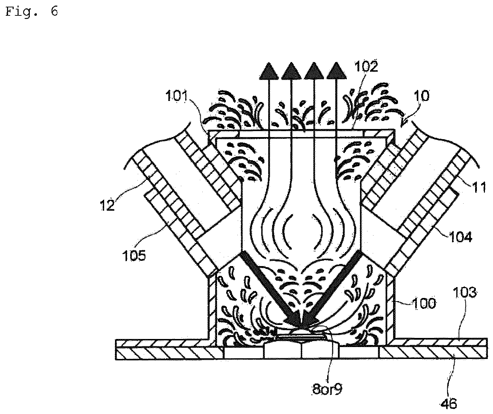

A water injection means 12 is attached to the water supply portion 105. Although it is not shown, the water injection means 12 has a structure comprising, for example, a supply source of water W, a pump for pressure-supplying water W, a pipe or hose for carrying water W, and a nozzle for injecting water W. The water injection means 12 is not limited to the above structure, and may be configured such that water from a water supply system is injected from the nozzle. The water injection means 12 injects water to the light-emitting portion 8 or the light-receiving portion 9 at a predetermined timing, as shown in Fig. 6.

As shown in Fig. 5, when air is continuously injected to the light-emitting portion 8 and the light-receiving portion 9 by the air injection means 11 during the brushing of the strip 2, contaminants, such as metal powder, oil stains, and waste threads, generated by the brushing of the strip 2 can be prevented from adhering to the light-emitting portion 8 or the light-receiving portion 9. In addition, metal powder, oil stains, contaminants, etc., weakly adhering to the light-emitting portion 8 or the light-receiving portion 9 can be removed (air flushing effect). The air injected to the light-emitting portion 8 or the light-receiving portion 9 then flows toward the opening 102 of the cover 10, and is ejected from the opening 102. Thereby, the metal powder, oil stains, contaminants, etc., air-flushed in the cover 10 can be discharged from the opening 102 to the outside of the cover 10. Further, metal powder, oil stains, contaminants, etc., in the outside of the cover 10 can be prevented from entering the cover 10 (air purge effect).

Thus, when air is continuously injected to the light-emitting portion 8 and the light-receiving portion 9 by the air injection means 11, metal powder, oil stains, contaminants, etc., hardly adhere to the light-emitting portion 8 and the light-receiving portion 9. In addition, due to the air purge effect, metal powder, oil stains, contaminants, etc., hardly enter the cover 10. Accordingly, the light-emitting portion 8 and the light-receiving portion 9 can be prevented from being contaminated with metal powder, oil stains, contaminants, etc., for a short period of time.

Moreover, when the light-emitting portion 8 and the light-receiving portion 9 are severely contaminated with metal powder, oil stains, contaminants, etc., firmly adhering thereto, water is injected to the light-emitting portion 8 and the light-receiving portion 9 by the water injection means 12 for a predetermined time, while injecting air to the light-emitting portion 8 and the light-receiving portion 9 by the air injection means 11, as shown in Fig. 6. Thereby, the injected water is entangled in the air flow injected by the air injection means 11 on the light-emitting portion 8 and the light-receiving portion 9 to thereby generate a turbulent state, and the air flow containing water scrapes off dirt firmly adhering to the light-emitting portion 8 and the light-receiving portion 9. Therefore, the dirt adhering to the light-emitting portion 8 and the light-receiving portion 9 can be more effectively removed (wet flushing effect), rather than by injecting only water. The dirt, such as metal powder, oil stains, and contaminants, wet-flushed in the cover 10 is discharged from the opening 102 to the outside of the cover 10. The time to inject water is not particularly limited, but is preferably 1 second to 10 seconds. The water injecting time is preferably 10 seconds or less, because when water is injected for a longer period of time, the stand-by time to detect the edge of the strip 2 becomes longer. Water may be injected continuously or intermittently for a predetermined period of time.

The timing in which water is injected to the light-emitting portion 8 and the light-receiving portion 9 by the water injection means 12 is not particularly limited. Water may be suitably injected depending on the degree of contamination of the light-emitting portion 8 and the light-receiving portion 9. As one criterion for determining the degree of contamination of the light-emitting portion 8 and the light-receiving portion 9, for example, the amount of light (light income) received by the light-receiving portion 9 can be used. When the amount of light received by the light-receiving portion 9 is lower than a predetermined amount, water may be injected from the water injection means 12. In this case, the control means 6 monitors the amount of light received by the light-receiving portion 9, and when the amount of light received by the light-receiving portion 9 is lower than a predetermined amount, the control means 6 allows the water injection means 12 to inject water. Water injection by the water injection means 12 is not necessarily controlled by the control means 6. Water may be injected at a predetermined timing by human hand.

The air injection means 11 is provided in the circumferential direction of the cover 10 in a position displaced at a predetermined angle with respect to the water injection means 12; however, it is preferable that the air injection means 11 is not provided in an opposite position (a position displaced at 180°), and it is most preferable that the air injection means 11 is provided in a position displaced at 90°. Thereby, the air purge effect mentioned above can be effectively exhibited.

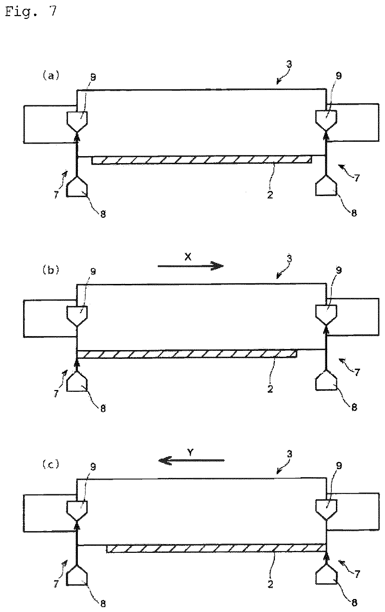

Next, the operation of the brushing apparatus 1 comprising the edge detection devices 7 mentioned above is explained using Fig. 7. Fig. 7 only shows a strip 21, one brush roll 3, and simplified edge detection devices 7. Further, in Fig. 7, sign 7A shows an edge detection device placed on the left side, and sign 7B shows an edge detection device placed on the right side, for convenience.

Fig. 7 (a) shows an initial state before the brushing of the strip 2. In the initial state, the strip 2 is positioned almost in the center of the brush roll 3. The edge detection devices 7 are placed in positions corresponding to both ends of the brush roll 3. When the operation of the brushing apparatus 1 is started, brushing treatment is performed while the brush roll stand 4 and the brush roll 3 supported by the brush roll stand 4 move in the width direction of the strip 2. Together with the start of the operation of the brushing apparatus 1, light is emitted from the light-emitting portions 8 of the edge detection devices 7A and 7B to the respective light-receiving portions 9, and air is injected by the air injection means 11 to the light-emitting portions 8 and the light-receiving portions 9.

As shown in Fig. 7 (a), when the strip 2 is positioned almost in the center of the brush roll 3, light emitted from the light-emitting portions 8 is not blocked by the strip 2 and enters the respective light-receiving portions 9 in both edge detection devices 7A and 7B. Thus, when the edges of the strip 2 are not present between the light-emitting portion 8 and the light-receiving portion 9 in both edge detection devices 7A and 7B, both ends of the brush roll 3 do not reach the edges of the strip 2. Accordingly, the control means 6 controls the operation of the transport means 5 to maintain the moving direction of the brush roll 3.

Next, as shown in Fig. 7 (b), when the brush roll 3 moves in the direction shown by the arrow X (forward movement), so that the left edge of the strip 2 reaches the left end of the brush roll 3, light emitted from the light-emitting portion 8 is blocked by the strip 2 and does not enter the light-receiving portion 9 in the edge detection device 7A, which is one of the two edge detection devices 7A and 7B. In contrast, in the other edge detection device 7B, light emitted from the light-emitting portion 8 is not blocked by the strip 2 and enters the light-receiving portion 9. Thus, when one edge of the strip is present between the light-emitting portion 8 and the light-receiving portion 9 in the edge detection device 7A, while the other edge of the strip is not present between the light-emitting portion 8 and the light-receiving portion 9 in the other edge detection device 7B, one end of the brush roll 3 has reached one edge of the strip 2. Accordingly, the control means 6 controls the operation of the transport means 5 so that the moving direction of the brush roll 3 is reversed to a direction opposite to the direction shown by the arrow X in Fig. 7 (b).

Next, as shown in Fig. 7 (c), as a result of reversing the moving direction of the brush roll 3, when the brush roll 3 moves in the direction shown by the arrow Y (backward movement), so that the right edge of the strip 2 reaches the right end of the brush roll 3, light emitted from the light-emitting portion 8 is not blocked by the strip 2 and enters the light-receiving portion 9 in the edge detection device 7A, which is one of the two edge detection devices 7A and 7B. In contrast, in the other edge detection device 7B, the light emitted from the light-emitting portion 8 is blocked by the strip 2 and does not enter the light-receiving portion 9. Thus, when one edge of the strip is not present between the light-emitting portion 8 and the light-receiving portion 9 in the edge detection device 7A, while the other edge of the strip is not present between the light-emitting portion 8 and the light-receiving portion 9 in the other edge detection device 7B, the other end of the brush roll 3 has reached the other edge of the strip 2. Accordingly, the control means 6 controls the operation of the transport means 5 so that the moving direction of the brush roll 3 is reversed to a direction opposite to the direction shown by the arrow Y in Fig. 7 (c) .

Thereafter, every time either of the edges of the strip 2 is detected by either of the edge detection devices 7, the reverse operation of the moving direction of the brush roll 3 is repeated. Thereby, the brush roll 3 reciprocates in the width direction of the strip 2, thereby preventing uneven wear of the brush roll 3 during the brushing of the strip 2. The brushing apparatus 1 comprising the edge detection devices 7 can respond to positional changes in the width direction due to the meandering of the strip 2, and changes in the width of the strip 2.

In the brushing apparatus 1 comprising the above edge detection devices 7, air is always continuously injected to the light-emitting portion 8 and the light-receiving portion 9 by the air injection means 11 in the edge detection devices 7 during the brushing of the strip 2; therefore, due to the air flushing effect and the air purge effect, metal powder, oil stains, contaminants, etc., generated by the brushing of the strip 2 hardly adhere to the light-emitting portion 8 and the light-receiving portion 9. Therefore, the light-emitting portion 8 and the light-receiving portion 9 can be prevented from being contaminated with metal powder, oil stains, contaminants, etc., for a short period of time. As a result, detection failure of the edges of the strip does not occur, and the edges of the strip can be precisely detected.

When the light-emitting portion 8 and the light-receiving portion 9 are severely contaminated with metal powder, oil stains, contaminants, etc., firmly adhering thereto, water is injected by the water injection means, while air is injected by the air injection means, to the light-emitting portion 8 and the light-receiving portion 9, thereby scraping off the dirt firmly adhering to the light-emitting portion 8 and the light-receiving portion 9 due to the wet flushing effect. Since it is thus possible to remove dirt from the light-emitting portion 8 and the light-receiving portion 9, it is not necessary to frequently perform maintenance, such as a cleaning operation of the edge detection devices 7 by human hand and component replacement, which can reduce labor required for maintenance.

Further, since the light-emitting portion 8 and the light-receiving portion 9 are covered with the covers 10, it is possible to protect the light-emitting portion 8 and light-receiving portion 9, which are vulnerable to impact etc.

In addition, the amount of water used can be decreased, compared with a brushing apparatus comprising conventional edge detection devices that detect the edges of a strip by injecting and receiving water. Therefore, the labor and cost required for wastewater treatment of water used can be reduced.

Although one embodiment of the present invention is described above, the present invention is not limited to the above embodiment. Various modifications can be made as long as they do not depart from the gist of the present invention.

For example, in the above embodiment, the light-emitting portion 8 is placed below the strip 2, and the light-receiving portion 9 is placed above the strip 2; however, the light-emitting portion 8 may be placed above the strip 2, and the light-receiving portion 9 may be placed below the strip 2.

Moreover, in the above embodiment, the light-emitting portion 8 is placed on one side of the front and back surfaces of the strip 2, and the light-receiving portion 9 is placed on the other side; that is, the light-receiving portion 9 is placed on the opposite side of the light-emitting portion 8 with respect to the strip 2. However, the light-receiving portion 9 may be placed on the same side of the light-emitting portion 8 with respect to the strip 2. In this case, the cover 10 is placed so as to integrally cover the light-emitting portion 8 and the light-receiving portion 9. Further, an opening 102 is formed in the ceiling surface 101 of the cover 10 facing the light-emitting portion 8 and the light-receiving portion 9. The air injection means 11 continuously injects air to the light-emitting portion 8 and the light-receiving portion 9, and the water injection means 12 injects water to the light-emitting portion 8 and the light-receiving portion 9 at a predetermined timing. When the end of the brush roll 3 does not reach the edge of the strip 2, the light emitted from the light-emitting portion 8 does not enter the light-receiving portion 9. When the end of the brush roll 3 reaches the edge of the strip 2, the light emitted from the light-emitting portion 8 is reflected at the edge of the strip 2 and enters the incidence portion 9. Thus, when the incidence portion 9 receives light, the control means 6 may determine that the end of the brush roll 3 has reached the edge of the strip 2, and may reverse the moving direction of the brush rolls 3.

Furthermore, in the above embodiment, photoelectric sensors are used as the light-emitting portion 8 and the light-receiving portion 9, and the edges of the strip 2 are detected by receiving or blocking ordinary light from a light source, such as an LED; however, laser sensors may be used as the light-emitting portion 8 and the light-receiving portion 9, and the edges of the strip 2 may be detected by receiving or blocking laser light.

### Examples

Examples of the present invention are described below. Note that the present invention is not limited to the following Examples.

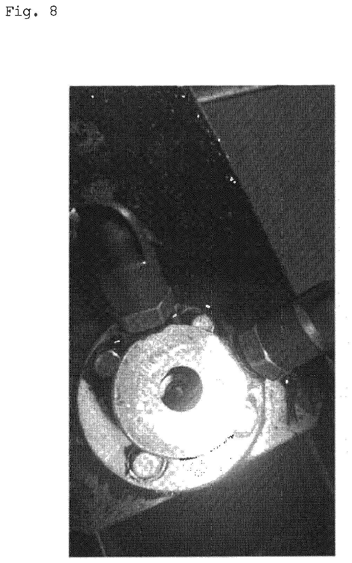

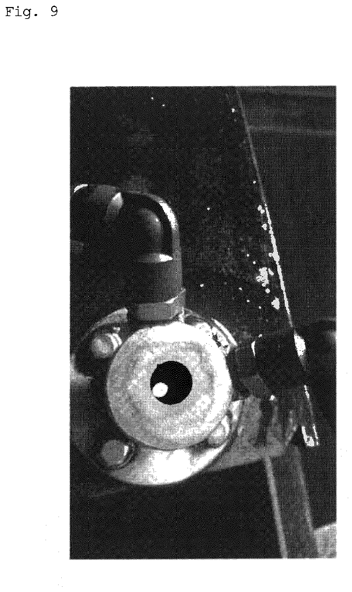

The light-emitting portion and light-receiving portion of the edge detection device provided in the brushing apparatus were "PX-H71TZ" (produced by Keyence Corp). The cover used is made of stainless steel, and has an inner diameter of φ26 mm, an outer diameter of φ30 mm, a height of 35 mm, and an opening diameter of 10 mm. The amount of air injected from the air injection means into the cover was set to 500 NL/min. The hydraulic pressure of water injected from the water injection means into the cover was set to 0.1 MPa. Figs. 8 and 9 each show a state in which the cover was attached to the light-emitting portion. Fig. 8 shows the off-state of the light-emitting portion, and Fig. 9 shows the on-state of the light-emitting portion.

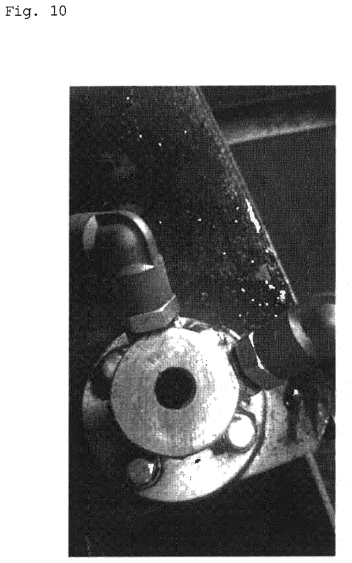

A large amount of sludge was applied to the light-emitting portion and light-receiving portion of the edge detection device so that dirt adhered to the light-emitting portion and the light-receiving portion under more severe conditions than those for dirt adhering to the light-emitting portion and light-receiving portion of the edge detection device when the strip was brushed using the brushing apparatus. Fig. 10 shows a state of dirt adhering to the light-emitting portion. The amount of light received by the light-receiving portion in this case was 0 to 10.

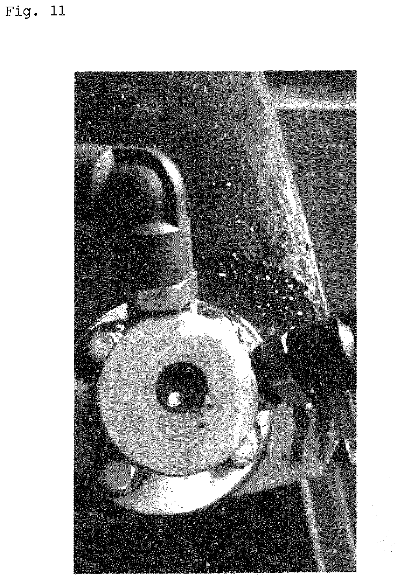

Next, Fig. 11 shows a state of the light-emitting portion when air flushing was performed by injecting air to the light-emitting portion and the light-receiving portion by the air injection means for 10 seconds. The amount of light received by the light-receiving portion in this case was about 500.

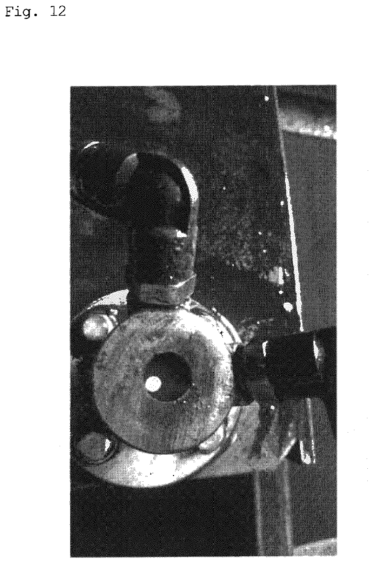

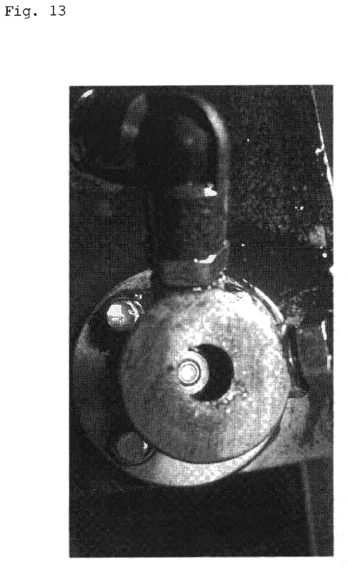

Next, Figs. 12 and 13 show a state of the light-emitting portion when air flushing was performed by injecting air to the light-emitting portion and the light-receiving portion by the air injection means, and then wet flushing of the light-emitting portion and the light-receiving portion was performed by injecting air to the light-emitting portion and the light-receiving portion by the air injection means while injecting water by the water injection means for 3 seconds. The amount of light received by the light-receiving portion in this case was 9999. Fig. 12 shows the off-state of the light-emitting portion, and Fig. 13 shows the on-state of the light-emitting portion.

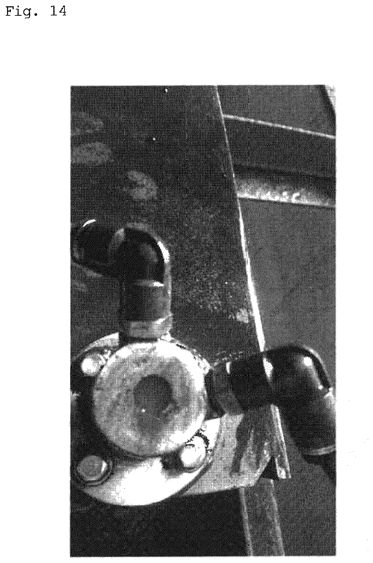

Moreover, Fig. 14 shows a state of the light-emitting portion when air flushing was performed by injecting air to the light-emitting portion and the light-receiving portion by the air injection means, and then the light-emitting portion and the light-receiving portion were washed by injecting water to the light-emitting portion and the light-receiving portion by the water injection means for 10 seconds. The amount of light received by the light-receiving portion in this case was about 50.

A comparison of the state of the light-emitting portion in Figs. 8 to 13 and the amount of light received by the light-receiving portion confirms the following. It is difficult to effectively remove dirt firmly adhering to the light-emitting portion (and the light-receiving portion) only by injecting air to the light-emitting portion and the light-receiving portion by the air injection means, as shown in Fig. 11. In contrast, according to wet flushing to inject air by the air injection means while injecting water by the water injection means, dirt firmly adhering to the light-emitting portion and the light-receiving portion can be effectively removed to almost the same extent before contamination (shown in Figs. 8 and 9), as shown in Figs. 12 and 13.

Moreover, only when water is injected by the water injection means to the light-emitting portion and the light-receiving portion, it is difficult to effectively remove dirt firmly adhering to the light-emitting portion (and the light-receiving portion), as shown in Fig. 14. In addition, the injected water is not discharged from the inside of the cover. Therefore, it can be confirmed that the amount of light received by the light-receiving portion is largely reduced under the influence of water.

Therefore, it is found that the present invention does not require frequent maintenance, such as a cleaning operation of the edge detection device by human hand and component replacement, and can reduce maintenance labor.

### Reference Signs List

1. Brushing apparatus
2. Strip
3. Brush roll
4. Brush roll stand
5. Transport means
6. Control means
7. Edge detection device
8. Light-emitting portion
9. Light-receiving portion
10. Cover
102. Opening
11. Air injection means
12. Water injection means

## Claims

1. An edge detection device that reciprocates in a width direction of a strip, together with brush rolls for brushing the strip, to detect an edge of the strip in the width direction, the edge detection device comprising:
a light-emitting portion for emitting light from one side of the front and back surfaces of the strip to the other side;
a light-receiving portion for receiving light emitted from the light-emitting portion, the light-receiving portion being placed on the opposite side of the light-emitting portion with respect to the strip;
multiple covers individually covering the light-emitting portion and the light-receiving portion, and each having an opening in a surface on a side facing the light-emitting portion or the light-receiving portion;
an air injection means for continuously injecting air to the light-emitting portion or the light-receiving portion, the air injection means being provided in each cover; and
a water injection means for injecting water to the light-emitting portion or the light-receiving portion at a predetermined timing, the water injection means being provided in each cover.

2. An edge detection device that reciprocates in a width direction of a strip, together with brush rolls for brushing the strip, to detect an edge of the strip in the width direction, the edge detection device comprising:
a light-emitting portion for emitting light from one side of the front and back surfaces of the strip to the other side;
a light-receiving portion for receiving light emitted from the light-emitting portion and reflected on the strip, the light-receiving portion being placed on the same side of the light-emitting portion with respect to the strip;
multiple covers integrally covering the light-emitting portion and the light-receiving portion, and each having an opening in a surface on a side facing the light-emitting portion and the light-receiving portion;
an air injection means for continuously injecting air to the light-emitting portion and the light-receiving portion, the air injection means being provided in each cover; and
a water injection means for injecting water to the light-emitting portion and the light-receiving portion at a predetermined timing, the water injection means being provided in each cover.

3. The edge detection device according to claim 1 or 2, wherein the air injection means is provided in a circumferential direction of the cover in a position displaced at 90° with respect to the water injection means.

4. The edge detection device according to any one of claims 1 to 3, wherein in the air injection means, the amount of air injected per unit time is set so that air is stably injected from the opening.

5. The edge detection device according to any one of claims 1 to 4, wherein the light-emitting portion and the light-receiving portion each comprise a photoelectric sensor.

6. The edge detection device according to any one of claims 1 to 5, further comprising a control means for controlling the water injection means.

7. The edge detection device according to claim 6, wherein the control means allows the water injection means to inject water when the amount of light received by the light-receiving portion is lower than a predetermined amount.

8. A brushing apparatus comprising:
brush rolls for brushing a strip;
a brush roll stand for rotatably supporting the brush rolls;
a transport means for reciprocating the brush roll stand in a width direction of the strip; and
the edge detection device according to any one of claims 1 to 7.
